# EUROPEAN PATENT APPLICATION

(11) **EP 3 124 891 A2**
(43) Date of publication of application: **01.02.2017**
(21) Application number: 15769105.6
(22) Date of filing: 26.03.2015
(51) Int. Cl.: F24J 1/00

(54) **METHOD FOR PRODUCING THERMAL AND ELECTRICAL ENERGY AND DEVICE FOR IMPLEMENTING SAID METHOD**

(30) Priority: 27.03.2014 RU 2014111562
(71) Applicant: Limited Liability Company "New Inflow", Moscow 119415 (RU)
(72) Inventor: GRIGORENKO, Anatoly Vladimirovich, stanitsa Geymanovskaya 352352 (RU); SIDORENKO, Maksim Konstantinovich, Zheleznodorozhny 143982 (RU); TOLKUNOV, Boris Nikolaevich, Chernogolovka 142432 (RU); KLIMOV, Anatoly Ivanovich, Moscow 121609 (RU); EVSTIGNEEV, Nikolai Mikhailovich, Moscow 125565 (RU)
(74) Representative: Viering, Jentschura & Partner mbB Patent- und Rechtsanwälte
(86) International application number: PCT/RU2015/000177
(87) International publication number: WO 2015/147703

(57) **Abstract**

The invention relates to electrical power engineering and can be used for the production of autonomous sources of thermal and electrical energy. The required technical result, which consists in increasing the effectiveness of the generation of thermal energy whilst at the same time producing electrical energy, is achieved in a method based on the generation of a high-voltage electrical discharge between an anode electrode and a cathode electrode which are mounted in series, said electrical discharge being formed from a hydride-forming metal, and forming a vortex flow of inert gas along the axis between the anode electrode and the cathode electrode in the direction of the cathode electrode with hot steam being injected into this flow, wherein the high-voltage electric discharge between the anode electrode and the cathode electrode is generated by means of the supply of a combined voltage to said electrodes, said combined voltage comprising a DC component and a radio-frequency component, the cathode electrode is in the form of a nozzle with an opening for the hot vapour outflow, and at least one pair of electrode probes for drawing electrical energy is mounted between the electrodes, one of said electrode probes being arranged on the axis of the vortex flow, and the other being arranged at the periphery thereof. The device for implementing the method comprises: a quartz tube in which an electrode anode and an electrode cathode are mounted in series on one axis, with an electrical energy generator being connected to said electrode anode and said electrode cathode, wherein the electrode cathode is formed from a hydride-forming metal; a generator of a vortex flow of inert gas, which is mounted at the inlet end of the quartz tube and is capable of generating a vortex flow of inert gas along the axis between the anode electrode and the cathode electrode in the direction of the cathode electrode; and also at least one pair of electrode probes, which are capable of drawing electrical energy, one of which electrode probes is arranged on the axis between the anode electrode and the cathode electrode, and the other of which is arranged at the periphery of the vortex flow, wherein the electrode anode is in the form of a steam injector, the electrode cathode is in the form of a nozzle with an opening for hot vapour outflow, and an electrical energy generator, which is connected to the electrode anode and the electrode cathode, is capable of generating a combined voltage comprising a DC component and a radio-frequency component.

## Description

### Art

The invention relates to electrical power engineering and can be used for the production of autonomous sources of thermal and electrical energy, the operation of which is based on using the interaction of ionized hydrogen with nano-cluster metal particles in the vortex flow of the actuation gas (intert gas and steam), when steam that passed an electric discharge zone is used as the main supplier of the ionized hydrogen, and erosive cathode in the same discharge is used as a supplier of nano-cluster metal particles.

### Prior art (with regard to object-method)

A method is disclosed [RU 2448409, C2, H03K 3/37, 20.04.2012] consisting in the fact that hydrogen is passed through a discharge unit containing, at least, two electrodes of anode and cathode arranged in series along the hydrogen flow, impulse voltage is supplied to the anode sufficient for a streamer discharge occurrence, and the impulse voltage is removed from the cathode to convert and transfer it to a consumer, wherein the impulse voltage is supplied with frequency 35 - 45 kHz, the value of the impulse voltage supplied to anode is 13-19 kV, the streamer discharge is maintained at the average current 0.5 - 1.0 A, and the hydrogen is passed through the discharge unit at the flow speed 85 - 110 m/s with direction from cathode to anode, and the hydrogen passed through the discharge unit is returned to the inlet of the discharge unit.

The negative attribute of the method is a relatively low level of the obtained thermal energy, and relatively narrow field of application, which is conditioned by impossibility of simultaneous obtaining of electric energy as well.

In terms of technical essence and the result obtained, the method of obtaining thermal energy is the closest method [Karabut A.b., Kucherov Y.R. Savvatimova I.B. Thermal Yield and Yield of Nuclear Reaction Products from Glow-Discharge Cathode in Deuterium, p. 124-131.- Materials of the 1st Russian Conference on Cold Fusion (Abrau-Dyurso, Novorossiysk, 28.09-02.10.1993). M.: MNTTs VENT, 1994], based on formation in the hydrogen (deuterium) of high-voltage electric discharge between electrodes, one of which - is cathode made of hydride-forming metal palladium at the discharge current 5 - 25 mA, discharge voltage 500 - 700 V and gas pressure 5 Torr.

Heat generation occurs as a result of interaction of ionized hydrogen and eroding particles (nano-clusters) radiated by cathode material with formation of palladium hydride accompanied by generation of thermal energy of hydrogen (deuterium) ionization in the plasma of high-voltage electric discharge occurring between electrodes. Generated heat (thermal power) calculated by the amount of heat released removed from water-cooled electrode holders makes 300 W. Specific thermal power related to dimensions (volume) of the reactor (quartz tube 50 mm diameter and 500 mm long) makes 0.3 W/cm³

The negative attribute of the method that is closest by its technical essence to a suggested one is a relatively low efficiency of thermal energy generation, and relatively narrow field of application, which is conditioned by impossibility of simultaneous obtaining of electric energy as well.

### Disclosure (with regard to object - method)

The task, to which the suggested method invention is directed to, lies in increasing of thermal energy generation efficiency at simultaneous expansion of the application scope by providing the possibility of electric energy production as well.

The required technical result lies in increasing of thermal energy generation efficiency with simultaneous expansion of application scope by providing the possibility of electric energy production as well.

The task assigned is solved, and the required technical result is achieved by the fact that in a method based on the generation of a high-voltage electrical discharge between an anode electrode and a cathode electrode formed from a hydride-forming metal, *according to the method invention,* form a vortex flow of inert gas along the axis between the anode electrode and the cathode electrode in the direction of the cathode electrode with hot steam being injected into this flow, wherein the high-voltage electric discharge between the anode electrode and the cathode electrode is generated by means of the supply of a combined voltage to said electrodes, this combined voltage comprising a DC component and a radio-frequency component, the cathode electrode is in the form of a nozzle with an opening for the discharge of hot steam, and at least one pair of electrode probes for drawing electrical energy is mounted between the electrodes, one of said electrode probes being arranged on the axis of the vortex flow, and the other being arranged at the periphery thereof.

The cause-effect relation between newly introduced material signs of method and achievement of the required technical result is explained by the fact that, a vortex flow of inert gas and hot water vapor is created between electrodes that causes intensive generation and separation of the ionized hydrogen and significantly more powerful (in comparison with a prototype) formation of cluster metal particles (products of the cathode electrode erosion) radiated by material that the electrode cathode is made of. As a result, by means of the electric discharge having both DC and AC components, the powerful flow of the ionized hydrogen is formed. It causes higher efficiency of generation of heat energy concerning a method - prototype. The vortex flow allows to stabilize an electric discharge, to concentrate the hydrogen (dissociated from steam) on axes and to separate ions into positive and negative for an opportunity of electric power extraction, by means of probe electrode couples.

### Prior art (with regard to object-device)

Devices for obtaining thermal energy are known.

In particular, the high-voltage generator is known [RU 2155443, S2, N03K 3/537, 27.08.2000] containing Marx generator having n - cascades each of which includes the switch in the form of a spark gap, and also charging source connected to a first cascade of the Marx generator and also the device for a periodic delay of action of a source of charging, at the same time, width of a spark gap in the switch of a first cascade is less, than at other switches, switches in the form of a spark gap are placed in the integral discharge tube filled with gaseous hydrogen under pressure, a source of charging is the capacitor, and the device for a periodic delay of action of a source of charging turns on by means of the device that is sensitive to discharging of the Marx generator.

The negative attribute of the device is rather low level of the generated thermal energy arising in the course of the device operation.

The closest by technical essence to the suggested one, is the device [Karabut A.B., Kucherov Y.R. Savvatimova I.B. Thermal Yield and Yield of Nuclear Reaction Products from Glow-Discharge Cathode in Deuterium, p. 124-131.- Materials of the 1st Russian Conference on Cold Fusion (Abrau-Dyurso, Novorossiysk, 28.09-02.10.1993). M.: MNTTs VENT, 1994], containing the quartz tube filled with hydrogen in which the electrode anode and the electrode cathode to which the radio-frequency generator is connected and which are supplied by the water-cooled electrode holders are consistently installed on one axis, at the same time, the electrode cathode is made of hydride-forming metal of palladium.

Heat generation occurs as a result of interaction of ionized hydrogen and eroding particles (nano-clusters) radiated by cathode material with formation of palladium hydride accompanied by generation of thermal energy of hydrogen (deuterium) ionization in the plasma of high-voltage electric discharge occurring between electrodes. The formed heat is removed from the water-cooled electrode holders.

The negative attribute of the device that is closest by its technical essence is a relatively low efficiency of thermal energy generation, and relatively narrow functional possibilities conditioned by impossibility of simultaneous obtaining of electric energy as well.

### Disclosure (with regard to object - device)

The task, to which the suggested device invention is directed to, lies in increasing of thermal energy generation efficiency and providing the possibility of simultaneous electric energy production as well.

The required technical result lies in increasing of thermal energy generation efficiency and possibility of simultaneous electric energy production as well.

The task assigned is solved, and the required technical result is achieved by the fact that into the device containing a quartz tube in which an electrode anode and an electrode cathode are mounted in series on one axis, with an electrical energy generator being connected to said electrode anode and said electrode cathode, wherein the electrode cathode is formed from a hydride-forming metal, *according to the device invention,* a generator of a vortex flow of inert gas is installed, which is mounted at the inlet end of the quartz tube and is capable of generating a vortex flow of inert gas along the axis between the anode electrode and the cathode electrode in the direction of the cathode electrode; and also at least one pair of electrode probes, which are capable of drawing electrical energy, one of which electrode probes is arranged on the axis between the anode electrode and the cathode electrode, and the other of which is arranged at the periphery of the vortex flow, wherein the electrode anode is in the form of a steam injector, the electrode cathode is in the form of a nozzle with an opening for discharging hot vapour, and an electrical energy generator, which is connected to the electrode anode and the electrode cathode, is capable of generating a combined voltage comprising a DC component and a radio-frequency component.

The cause-effect relation between newly introduced material signs of device and achievement of the required technical result is explained by the fact that introduced technical means (a generator of a vortex flow of inert gas, which is mounted at the inlet end of the quartz tube and is capable of generating a vortex flow of inert gas along the axis between the anode electrode and the cathode electrode in the direction of the cathode electrode; and also at least one pair of electrode probes, which are capable of drawing electrical energy, one of which electrode probes is arranged on the axis between the anode electrode and the cathode electrode, and the other of which is arranged at the periphery of the vortex flow, wherein the electrode anode is in the form of a steam injector, the electrode cathode is in the form of a nozzle with an opening for hot vapour outflow, and an electrical energy generator, which is connected to the electrode anode and the electrode cathode, is capable of generating a combined voltage comprising a DC component and a radio-frequency component) that make it possible with the help of the electric discharge having both AC and DC components, generate a powerful flow of ionized hydrogen. It causes higher efficiency of generation of heat energy concerning a method - prototype, and the possibility of electric energy production. The vortex flow helps to separate heavy and light ions and electrons and to concentrate a hydrogen flow on a whirlwind axis where anode and cathode electrodes of the reactor are arranged. Thereby, the mode of optimum interaction is provided of a flow of light ions of hydrogen and eroding nano-particles which escape from material of the cathode electrode. And the possibility of removal of electric power is provided with couple of probe electrodes representing electrodes executed with a possibility of removal of electric power, one of which is placed on an axis between an anode electrode and the cathode electrode, and another - on the periphery of a vortex flow. The vortex flow allows to stabilize an electric discharge, to concentrate the hydrogen (dissociated from steam) on axes and to separate ions into positive and negative for an opportunity of electric power extraction, by means of these probe electrode couples.

### Execution principle (with regard to object-method)

The suggested way of receiving thermal and electric energy consists in the following.

The method of receiving thermal and electric energy is based on use of interaction of the ionized hydrogen with nano-cluster metal particles (metal erosion products) in a vortex flow of inert gas and steam. As the main supplier of the ionized hydrogen the steam injected in a vortex dissociated and ionized in the reactor (for example, in a quartz tube) by means of a nonequilibrium pulse and periodic electric discharge is used. The same electric discharge is used for production of nano-dimensional metal clusters by means of an erosion of the electrode cathode. The vortex flow helps to separate heavy and light ions and electrons and to concentrate a hydrogen flow on a whirlwind axis where anode and cathode electrodes of the reactor are arranged. Thereby, the optimum regime of interaction is provided between a flow of hydrogen light ions of and eroding nano-particles which are formed from material of the cathode electrode.

Additional production of electric power is possible from a high-speed flow of a heterogeneous plasma flow (hydrogen ions + hot ionized eroding nano-particles) with a high conductivity from an outflow nozzle of the reactor - a nozzle with an opening for release of hot vapour in the form of which the electrode cathode is shaped. The vortex flow allows to stabilize an electric discharge, to concentrate the hydrogen (dissociated from steam) on axes and to separate ions into positive and negative for an opportunity of electric power extraction, by means of these probe electrode couples. Separation of ions by weight in a vortex flow results in emergence of electric power which is shown in the form of a potential difference on an axis of a vortex flow and its periphery. Effective removal of electric power can be performed with a couple of probe electrodes, one of which is placed on an axis between an anode electrode and the cathode electrode, and another - on the periphery of a vortex flow.

The described method can be implemented in the suggested device for production of thermal and electric power.

### Execution principle (with regard to object-device)

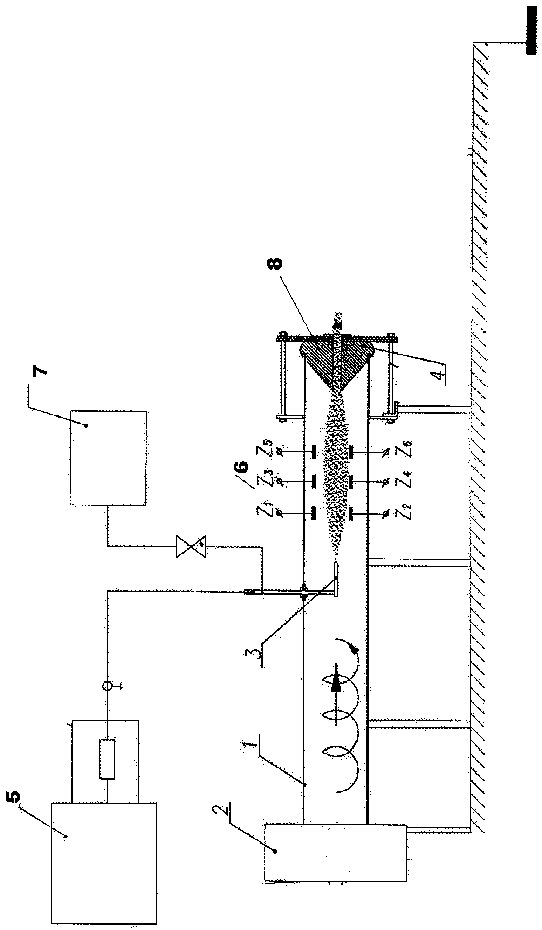

The example of device execution to produce thermal and electric power is presented in the drawing.

The diagram shows: 1 - a quartz tube, for example, with a diameter of 50 mm and 500 mm long, 2 - the shaper of a vortex flow of inert gas, 3 - the electrode anode that is made in the form of an injector of steam, 4 - the electrode cathode in the form of a nozzle with an opening for hot vapour outflow, 5 - the generator of electric power, couple 6 probes electrodes.

In the generator of thermal and electric energy in the quartz tube 1 executed, for example, with diameter of 50 mm and 500 mm long, the electrode anode 3 and the electrode cathode 4 are arranged in series to which the generator 5 of electric power is connected. The generator 5 of electric power connected to the electrode anode and the electrode cathode can be executed, for example, in a form of HF generator with a source of direct current (6 kV, 2,5A) with a possibility of forming of the combined voltage including DC and high-frequency components.

Besides, in the device for thermal and electric power production, the electrode cathode 4 is made of hydride-forming metal, the shaper 2 of a vortex flow of inert gas is installed on the inlet end of a quartz tube 1 and executed with a possibility of forming of a vortex flow of inert gas along an axis between an anode electrode 3 and the cathode electrode 4 in the direction on the cathode electrode 4, couple 6 probes electrodes can be executed in the form of standard electrodes with a possibility of removal of electric power. For the most effective extraction of electric power one of which is arranged on an axis of a vortex flow between an anode electrode 3 and the cathode electrode 4, and another - on the periphery of a vortex flow.

In the device for thermal and electric power production the electrode anode 3 is executed in the form of an injector of steam and connected, for example, to the generator 7 of steam, the electrode cathode 4 is executed in the form of a nozzle 8 with an opening for release of hot steam, and the generator 5 of high frequency connected to the electrode anode 3 and the electrode cathode 4 is executed with a possibility of forming of the combined tension including DC and high-frequency components. Such execution of the generator 5 allows to create a nonequilibrium pulse and periodic electric discharge between the electrode anode 3 and the cathode 4 that provides effective formation of nano-dimensional eroding metal particles (material of an erosion of the cathode electrode 4).

### Device operation

The device for implementation of the suggested method of thermal and electric power production works as follows.

In a particular example of the device execution, the quartz tube 1 has diameter of 50 mm and length of 500 mm, an anode electrode 3 is executed from a molybdenum alloy on a steel stud bolt, the cathode electrode 4 is executed in the form of a locking cone - a nozzle with an opening for outflow of hot vapour, and the generator of electric power is executed with the power source of 6 kV, 2.5 A.

Molecules of steam are dissociated and ionized in the plasma created by the high-voltage combined electric discharge between anode 3 and the cathode 4 electrodes due to the connection of the generator of electric power 5 to them. The vortex flow separates ions by weight. Therefore the ionized flow of the hydrogen concentrates on axes of vortex. The electric discharge is used also for creation of nano-dimensional eroding metal particles (material of an erosion of the cathode electrode 4). In the working chamber of the reactor (in a quartz tube 1) there is an effective interaction of these nano-clusters and a flow of the ionized hydrogen. It causes formation of metals hydrides in which there may be low-energy nuclear reactions. Strongly heated heterogeneous plasma flow with a high conductivity turns out (T_{Π}∼3000-4000K). Such hot flow is used for receiving heat of hot gas in the reactor and electric power by means of probes electrode couples, one of which is installed on the periphery of a vortex flow, and another on its axis.

The conducted researches on experimental unit allow to make comparison of results of application of the known method and the device corresponding to it and the offered method and the device.

As it is stated above, in the known device implementing the known method, the output thermal power reached 300 W that corresponded to specific thermal power (to the power related to dimensions (volume) of the reactor (a quartz tube with a diameter of 50 mm and 500 mm long)) made 0.3 W/cm³.

At the same time, in the course of experimental works on the offered unit by authors at power range of discharge up to 3 kW and initial pressure to 2 atm, output thermal power reached 5 kW that corresponded to the specific thermal power equal to 5.1 W/cm³.

As it appears from the provided data, the offered method and the device for thermal and electric energy production provide increase of efficiency of thermal energy generation in comparison with the known method and the device. Additionally, the scope of the method and functionality of the device are expanded by providing the possibility of simultaneous electric energy generation.

Thus the efficiency of heat energy production is substantially increased owing to new operations of the method (namely, the formation of vortex steam flow between electrodes in the direction of the cathode; the latter is shaped in the form of a nozzle with an opening for the hot vapour outflow) because the water steam causes powerful generation of hydride erosion particles (nano-clusters) formed from cathode material with the simultaneous production of electric energy.

Moreover, owing to the introduction of new technical means in the device-prototype (in particular, by the fact that a generator of a vortex flow of inert gas is introduced, which is mounted at the inlet end of the quartz tube and is capable of generating a vortex flow of inert gas along the axis between the anode electrode and the cathode electrode in the direction of the cathode electrode; and also at least one pair of electrode probes, which are capable of extracting electrical energy, one of these electrode probes is arranged on the axis between the anode electrode and the cathode electrode, and the other is arranged at the periphery of the vortex flow, wherein the electrode anode is in the form of a steam injector, the electrode cathode is in the form of a nozzle with an opening for hot vapour outflow, and an electrical energy generator, that is connected to the electrode anode and the electrode cathode which is capable of generating a combined voltage comprising a DC component and a radio-frequency component), efficiency of thermal energy generation is significantly increases as the created vortex flow of steam causes more powerful formation of hydride of eroding particles (nano-clusters) generated by material that the electrode cathode is made of and simultaneous generation of electric power which is extracted by means of probe electrodes is provided.

## Claims

1. The method of producing thermal and electric energy based on generation of a high-voltage electrical discharge between an anode electrode and a cathode electrode made of hydride-forming metal, **characterized in that** a vortex flow of inert gas is formed along the axis between the anode electrode and the cathode electrode in the direction of the cathode electrode with hot steam being injected into this flow, wherein the high-voltage electric discharge between the anode electrode and the cathode electrode is generated by means of the supply of a combined voltage to said electrodes, said combined voltage comprising a DC component and a radio-frequency component, the cathode electrode is in the form of a nozzle with an opening for the hot vapour outflow, and at least one pair of electrode probes for electrical energy extraction is mounted between the electrodes, one of these electrode probes being arranged on the axis of the vortex flow, and the other being arranged at the periphery thereof.

2. The device for implementation of method according to c.1 containing a quartz tube in which an electrode anode and an electrode cathode are mounted in series on one axis, with an electrical energy generator being connected to said electrode anode and said electrode cathode, wherein the electrode cathode is formed from a hydride-forming metal **characterized in that** a generator of a vortex flow of inert gas is introduced, which is mounted at the inlet end of the quartz tube and is capable of generating a vortex flow of inert gas along the axis between the anode electrode and the cathode electrode in the direction of the cathode electrode; and also at least one pair of electrode probes, which are capable of drawing electrical energy, one of these electrode probes is arranged on the axis between the anode electrode and the cathode electrode, and the other is arranged at the periphery of the vortex flow, wherein the electrode anode is in the form of a steam injector, the electrode cathode is in the form of a nozzle with an opening for hot vapour outflow, and an electrical energy generator, which is connected to the electrode anode and the electrode cathode, is capable of generating a combined voltage comprising a DC and radio-frequency component.
